# EUROPEAN PATENT APPLICATION

(11) **EP 4 007 418 A1**
(43) Date of publication of application: **01.06.2022**
(21) Application number: 20210658.9
(22) Date of filing: 30.11.2020
(51) Int. Cl.: H04W 72/12, H04W 24/10

(54) **SIGNALING INDICATION OF SCHEDULING RESTRICTIONS**

(71) Applicant: Nokia Technologies Oy, 02610 Espoo (FI)
(72) Inventor: DALSGAARD, Lars, 90230 Oulu (FI); PEDERSEN, Klaus Ingemann, 9000 Aalborg (DK)
(74) Representative: Nokia EPO representatives

(57) **Abstract**

An apparatus, comprising at least one processor, and at least one memory storing instructions, the at least one memory and the instructions configured to, with the at least one processor, cause a terminal device to signal to a network device a first information indicating whether the terminal device has scheduling restrictions related to intra-frequency measurements.

## Description

### Field of the Disclosure

Various example embodiments relate to an apparatus comprising at least one processor.

Further embodiments relate to a method of operating related to such apparatus.

### Background

Wireless communications systems may e.g. be used for wireless exchange of information between two or more entities, e.g. comprising one or more terminal devices, e.g. user equipment (UE), and one or more network devices such as e.g. base stations, the base stations e.g. providing radio cells for serving terminal devices such as the UE.

Some UE may at least temporarily perform intra-frequency measurements, e.g. measurements on non-serving radio cells on a serving frequency carrier.

### Summary

Various embodiments of the disclosure are set out by the independent claims. The exemplary embodiments and features, if any, described in this specification, that do not fall under the scope of the independent claims, are to be interpreted as examples useful for understanding various exemplary embodiments of the disclosure.

Some embodiments relate to an apparatus, comprising at least one processor, and at least one memory storing instructions, the at least one memory and the instructions configured to, with the at least one processor, cause a terminal device, e.g. UE, to signal to a network device a first information indicating whether the terminal device has scheduling restrictions related to intra-frequency measurements. In some embodiments, the network device may use the first information, e.g. to perform scheduling for the terminal device based on the first information.

In some embodiments, the apparatus may be an apparatus for a wireless communications system.

In some embodiments, the apparatus or its functionality, respectively, may be provided for and/or in a terminal device of the communications system, for example in a user equipment (UE).

In some embodiments, the network device may be a base station, e.g. a gNodeB (gNB), e.g. for the wireless communications system.

In some embodiments, the apparatus according to the embodiments or its functionality, respectively, may be used for or within wireless communications systems, e.g. networks, based on or at least partially adhering to third generation partnership project, 3GPP, radio standards such as 5G (fifth generation), e.g. 5G NR (new radio), or other radio access technology.

In some embodiments, the instructions, when executed by the at least one processor, cause the terminal device to signal the first information when the terminal device is configured with a search threshold characterizing when the terminal device should, e.g. at least, perform measurements, e.g. radio resource management (RRM) measurements, e.g. associated with non-serving cells. In other words, in some embodiments, the terminal device may be configured, e.g. by the network device, with the search threshold.

In some embodiments, the instructions, when executed by the at least one processor, cause the terminal device to signal the first information, e.g. also in cases where the terminal device is not configured with a threshold, e.g. search threshold.

In some embodiments, the network device may indicate to the terminal device to signal the first information, e.g. by transmitting an indication request to the terminal device, the indication request instructing the terminal device to signal the first information.

In some embodiments, the terminal device may be configured to receive the indication request, and, optionally, to control its operation accordingly, e.g. signaling the first information, based on the received indication request.

In some embodiments, the indication request may be included in and/or transmitted together with a measurement configuration, e.g. as may be provided by the network device to the terminal device in some embodiments.

In some embodiments, the search threshold configuration may be made using a threshold for New Radio (NR) serving cell (e.g. SpCell) reference signal received power (RSRP) measurement controlling when the terminal device is supposed to perform measurements on non-serving cells, e.g. using s-MeasureConfig based on and/or according to 3GPP TS 38.331.

In some embodiments, if the terminal device is configured with the search threshold, e.g. the s-MeasureConfig, the terminal device may measure non-serving cells when the serving cell quality (e.g. SS-RSRP) is below a set threshold. In some embodiments, if the serving cell quality is above the set threshold, e.g. the s-MeasureConfig threshold, the terminal device may be allowed not to measure non-serving cells (but, in some embodiments, may also be allowed to measure those non-serving cells).

In some embodiments, also such cases may be covered, where the terminal device, e.g. NR UE, may have multiple directional antenna panels, and may use beamforming (and/or beam-sweeping) for at least some of the panels. In some embodiments, such multi-panel terminal devices may be implemented such that they can measure on one antenna panel per time instant, although, according to some further embodiments, options with terminal devices being able to measure on multiple antenna panels in parallel may also be supported, e.g. for certain terminal device categories/capabilities.

In some embodiments, if the terminal device is configured with the search threshold, e.g. in a connected mode, the terminal device may stop performing measurements on non-serving cells, e.g. if the serving cell quality is better than a configured threshold. In some embodiments, this may include measurements on non-serving cells on the serving carrier, e.g. the intra-frequency measurements.

In some embodiments, the network may not have the knowledge when or if the terminal device stops performing the intra-frequency measurements, and hence, the network (and the terminal device) may not be able to harvest an unused gain from scheduling the terminal device e.g. on resources, e.g. symbols, where the terminal device may otherwise be assumed not being possible to schedule (e.g., due to the described restrictions). In some embodiments, this issue may be addressed by using the first information signaled from the terminal device. Based on the first information, which indicate whether the terminal device has scheduling restrictions related to intra-frequency measurements, the network (and the terminal device) may be able to harvest the abovementioned gain.

In some embodiments, the instructions, when executed by the at least one processor, cause the terminal device to signal the first information using at least one of: a) layer 3 signaling, for example radio resource control, RRC, signaling, b) layer 2 signaling, for example media access control, MAC, control element, CE, signaling, c) layer 1 signaling.

In some embodiments, a new, e.g. specific, reporting event may be defined, e.g. based on the measurement threshold, e.g. the s-MeasureConfig threshold, e.g. indicating to the network (device) that the terminal device is no longer limited in scheduling due to intra-frequency measurements.

In some embodiments, e.g. when using MAC-CE layer signaling, a new MAC-CE message may be defined, e.g. indicating to the network (device) that the terminal device is no longer limited in scheduling due to intra-frequency measurements.

In some embodiments, an L1 (layer 1) indication or message indicating to the network (device) e.g. that the terminal device is no longer limited in scheduling due to intra-frequency measurements may be provided. In some embodiments, such L1 indication may be defined for a physical uplink control channel (PUCCH), physical uplink shared channel (PUSCH) or other L1 signaling means.

In some embodiments, the instructions, when executed by the at least one processor, cause the terminal device to signal, e.g. by using the first information, that the terminal device will initiate intra-frequency measurements.

In some embodiments, the instructions, when executed by the at least one processor, cause the terminal device to signal, e.g. using the first information, that the terminal device will no longer perform intra-frequency measurements or will perform reduced intra-frequency measurements on non-serving cells.

In some embodiments, some terminal devices may have limitations in their scheduling availability when performing measurements: As an example, considering e.g. intra-frequency measurements without gaps in 5G NR, cell detection requirements and measurement requirements are defined in section 9.2.5.1 and 9.2.5.2 in 3GPP TS 38.133. Section 9.2.5.3 describes the terminal device scheduling availability assumption related to a device performing intra-frequency measurement. As can be recognized, there may be defined scheduling restrictions for a terminal device performing intra-frequency measurements when: a) Scheduling availability of terminal device performing measurements with a different subcarrier spacing than PDSCH/PDCCH on a first frequency range, e.g. FR1, b) Scheduling availability of terminal device performing measurements on a second frequency range, e.g. FR2.

In some examples, in the first case a), the restrictions are e.g. for a terminal device which does not support simultaneous reception of data and synchronization signal block (SSB) with different numerology (e.g., simultaneousRxDataSSB-DiffNumerology) which leads to, that if the data transmission in the serving carrier is using a subcarrier spacing (SCS) of e.g. 30kHz while the SSB of the cell to be measured is transmitted using another SCS (e.g. SCS of 15kHz), such terminal device may not be required to receive data when performing measurements. In this case the following restrictions may apply:
If deriveSSB_IndexFromCell is enabled the terminal device may not be expected to transmit physical uplink control channel (PUCCH) / physical uplink shared channel (PUSCH) / sounding reference signals (SRS) or receive physical downlink control channel (PDCCH) / physical downlink shared channel (PDSCH) / tracking reference signals (TRS) / channel state indication reference signal (CSI-RS) for channel quality information (CQI) on SSB symbols to be measured, and on 1 data symbol before each consecutive SSB symbols to be measured and 1 data symbol after each consecutive SSB symbols to be measured within SSB measurement timing configuration (SMTC) window duration.

In the second case b) (e.g., FR2), where terminal device receive (Rx) beam forming (e.g., including cases with multiple antenna panels) is used on the terminal device side and sweeping may be used by the terminal device to perform measurements, the restrictions may be caused by the terminal device Rx beam sweeping. Due to terminal device beam sweeping its Rx (e.g., possibly using different panels than serving panel), the terminal device may not be able to receive the data transmitted to the terminal device in the symbols where the terminal device perform Rx sweeping (for measurements): As an example, the terminal device may not be expected to transmit PUCCH/PUSCH/SRS or receive PDCCH/PDSCH/TRS/CSI-RS for CQI on SSB symbols to be measured, and on 1 data symbol before each consecutive SSB symbols to be measured and 1 data symbol after each consecutive SSB symbols to be measured within SMTC window duration (The signaling deriveSSB_IndexFromCell may be always enabled for FR2).

Hence, from this it is seen that a terminal device may be allowed relaxations in the data reception e.g. when performing intra-frequency measurements, e.g. when the described conditions are fulfilled. Sometimes, those relaxations on data reception/transmission may have a negative impact on the user-plane experienced quality of service (QoS) as terminal devices may be subject to such data scheduling restrictions. In some embodiments, these issues may be at least temporarily be addressed or mitigated based on the principle of the embodiments.

In some embodiments, the principle of the embodiments may be applied when no search thresholds are configured, but when the terminal device is e.g. allowed to relax intra-frequency measurement on non-serving cells (e.g. based on terminal device specific rules). In other words, in such cases, too, the terminal device may indicate to the network (device) e.g. when scheduling restrictions are or are not in use, e.g. using the first information.

Some embodiments relate to an apparatus, comprising at least one processor, and at least one memory storing instructions, the at least one memory and the instructions configured to, with the at least one processor, cause a network device, e.g. gNB, to receive a first information from a terminal device, e.g. UE, the first information indicating whether the terminal device has scheduling restrictions related to intra-frequency measurements.

In some embodiments, the instructions, when executed by the at least one processor, allow the network device to perform scheduling for the terminal device based on the first information.

In some embodiments, the instructions, when executed by the at least one processor, cause the network device to receive signaling from the terminal device indicating that the terminal device will initiate intra-frequency measurements.

In some embodiments, the instructions, when executed by the at least one processor, cause the network device to receive signaling from the terminal device indicating that the terminal device will no longer perform intra-frequency measurements.

In some embodiments, the instructions, when executed by the at least one processor, cause the network device to perform scheduling for the terminal device based on the received signaling.

In some embodiments, the instructions, when executed by the at least one processor, cause the network device to indicate to the terminal device to signal the first information, e.g. by transmitting an indication request to the terminal device, the indication request instructing the terminal device to signal the first information.

In some embodiments, the network device may be configured to include the indication request in and/or to transmit the indication request together with a measurement configuration.

Some embodiments relate to a method comprising: signaling, by means of a terminal device, e.g. UE, to a network device, e.g. gNB, a first information indicating whether the terminal device has scheduling restrictions related to intra-frequency measurements.

Some embodiments relate to a method comprising: receiving, by a network device, e.g. gNB, a first information from a terminal device, e.g. UE, the first information indicating whether the terminal device has scheduling restrictions related to intra-frequency measurements.

Some embodiments relate to an apparatus comprising means for causing a terminal device, e.g. UE, to signal to a network device, e.g. gNB, a first information indicating whether a terminal device a) has scheduling restrictions and/or b) indicates a need for scheduling restrictions related to intra-frequency measurements. In some embodiments, the means may e.g. comprise at least one processor, and at least one memory storing instructions, the at least one memory and the instructions configured to, with the at least one processor, perform the step(s).

Some embodiments relate to an apparatus comprising means for causing a network device, e.g. gNB, to receive a first information from a terminal device, e.g. UE, the first information indicating whether the terminal device a) has scheduling restrictions and/or b) indicates a need for scheduling restrictions related to intra-frequency measurements. In some embodiments, the means may e.g. comprise at least one processor, and at least one memory storing instructions, the at least one memory and the instructions configured to, with the at least one processor, perform the step(s).

In some embodiments, the network device may be configured to configure and/or allow the scheduling restrictions for the terminal device.

Some embodiments relate to a wireless communications system comprising at least one apparatus according to the embodiments.

### Brief Description of the Figures

- Fig. 1A: schematically depicts a simplified block diagram of an apparatus according to some embodiments,
- Fig. 1B: schematically depicts a simplified block diagram of an apparatus according to some embodiments,
- Fig. 2: schematically depicts a simplified block diagram according to some embodiments,
- Fig. 3: schematically depicts a simplified flow chart according to some embodiments,
- Fig. 4: schematically depicts a simplified flow chart according to some embodiments,
- Fig. 5: schematically depicts a simplified flow chart according to some embodiments,
- Fig. 6: schematically depicts a simplified flow chart according to some embodiments,
- Fig. 7: schematically depicts a simplified flow chart according to some embodiments,
- Fig. 8: schematically depicts a simplified flow chart according to some embodiments,
- Fig. 9: schematically depicts a simplified flow chart according to some embodiments,
- Fig. 10: schematically depicts a simplified block diagram of an apparatus according to some embodiments, and
- Fig. 11: schematically depicts a simplified block diagram of an apparatus according to some embodiments.

### Description of some Exemplary Embodiments

Some embodiments relate to an apparatus, e.g. for a terminal device, e.g. UE, e.g. of a wireless communications system.

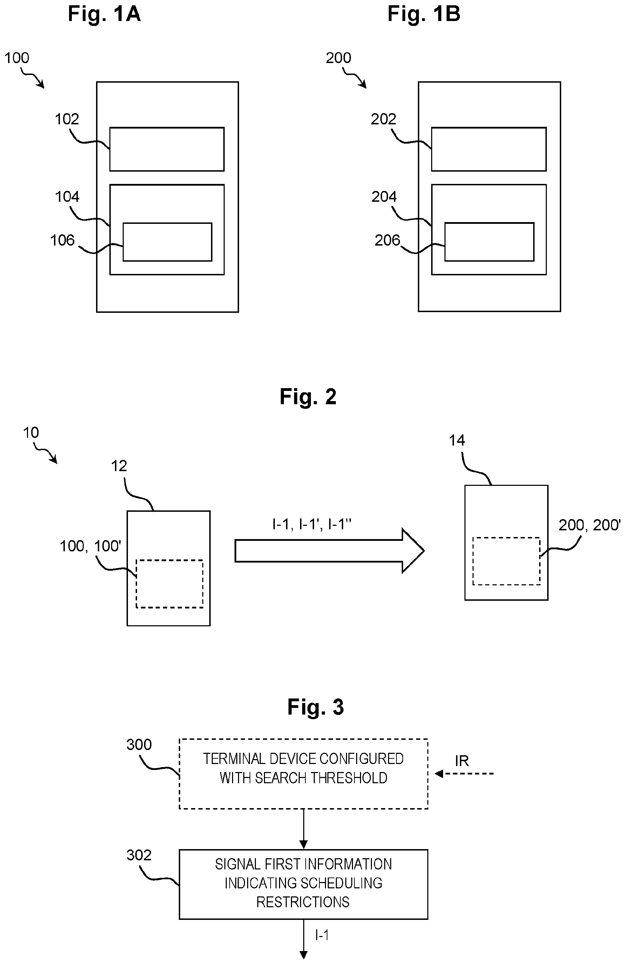

Fig. 1A schematically depicts a simplified block diagram of the apparatus 100 according to some embodiments, Fig. 2 schematically depicts a simplified block diagram of a wireless communications system 10 according to some embodiments, and Fig. 3 schematically depicts a simplified flow chart of a method associated with the apparatus 100 according to some embodiments.

The apparatus 100, Fig. 1A, comprises at least one processor 102, and at least one memory 104 storing instructions 106, the at least one memory 104 and the instructions 106 configured to, with the at least one processor 102, cause a terminal device, e.g. UE, 12 (Fig. 2) to signal 302 (Fig. 3) to a network device, e.g. gNB, 14 a first information I-1 indicating whether the terminal device 12 has scheduling restrictions related to intra-frequency measurements. In some embodiments, the network device 14 may use the first information I-1, e.g. to perform scheduling, e.g. for the terminal device 12, based on the first information I-1.

In some embodiments, the apparatus 100 may be an apparatus for a wireless communications system 10.

In some embodiments, the apparatus 100 or its functionality, respectively, may be provided for and/or in a terminal device 12 of the communications system 10, for example in a user equipment (UE) 12.

In some embodiments, the network device 14 may be a base station, e.g. a gNodeB (gNB), e.g. for the wireless communications system 10.

In some embodiments, the apparatus 100 according to the embodiments or its functionality, respectively, may be used for or within wireless communications systems 10, e.g. networks, based on or at least partially adhering to third generation partnership project, 3GPP, radio standards such as 5G (fifth generation) or other radio access technologies.

In some embodiments, the instructions 106, when executed by the at least one processor 102, cause the terminal device 12 to signal 302 the first information I-1 when the terminal device 12 is configured, see block 300 of Fig. 3, with a search threshold characterizing when the terminal device 12 should perform measurements associated with non-serving cells. In other words, in some embodiments, the terminal device 12 may be configured, block 300, e.g. by the network device 14, with the search threshold.

In some embodiments, the network device 14 may indicate to the terminal device 12 to signal 302 the first information I-1, e.g. by transmitting an indication request IR (Fig. 3) to the terminal device 12, the indication request IR instructing the terminal device 12 to signal the first information.

In some embodiments, the terminal device 12 may be configured to receive the indication request IR, and, optionally, to control its operation accordingly, e.g. signaling 302 the first information, based on the received indication request IR.

In some embodiments, the indication request IR may be included in and/or transmitted together with a measurement configuration, e.g. as may be provided by the network device 14 to the terminal device 12 in some embodiments.

In some embodiments, the search threshold configuration may be made using a threshold for New Radio (NR) serving cell (SpCell) reference signal received power (RSRP) measurement controlling when the terminal device 12 is supposed to perform measurements on non-serving cells, e.g. using s-MeasureConfig based on and/or according to 3GPP TS 38.331.

In some embodiments, if the terminal device 12 is configured with the search threshold, e.g. the s-MeasureConfig, the terminal device 12 may measure non-serving cells when the serving cell quality (e.g. SS-RSRP) is below a set threshold. In some embodiments, if the serving cell quality is above the set threshold, e.g. the s-MeasureConfig threshold, the terminal device 12 may be allowed not to measure non-serving cells (but, in some embodiments, may also be allowed to measure those non-serving cells).

In some embodiments, the instructions, when executed by the at least one processor, cause the terminal device 12 to signal the first information I-1, e.g. also in cases where the terminal device 12 is not configured with a threshold, e.g. search threshold.

In some embodiments, also such cases may be covered, where the terminal device 12, e.g. NR UE, may have multiple directional antenna panels, and may use beamforming (and/or beam-sweeping) for at least some of the panels. In some embodiments, such multi-panel terminal devices may be implemented such that they can measure on one antenna panel per time instant, although, according to some further embodiments, options with terminal devices being able to measure on multiple antenna panels in parallel may also be supported, e.g. for certain terminal device categories/capabilities.

In some embodiments, if the terminal device 12 is configured with the search threshold, e.g. in a connected mode, the terminal device 12 may stop performing measurements on non-serving cells, e.g. if the serving cell quality is better than a configured threshold. In some embodiments, this may include measurements on non-serving cells on the serving carrier, e.g. the intra-frequency measurements.

In some embodiments, the network may not have the knowledge when or if the terminal device 12 stops performing the intra-frequency measurements on non-serving cells, and hence, the network (and the terminal device) may not be able to harvest an unused gain from scheduling the terminal device e.g. on resources, e.g. symbols, where the terminal device may otherwise be assumed not being possible to schedule (e.g., due to the described restrictions). In some embodiments, this issue may be addressed by using the first information I-1 (Fig. 2, 3) signaled from the terminal device 12. Based on the first information I-1, which indicate whether the terminal device 12 has scheduling restrictions related to intra-frequency measurements, the network (and the terminal device) may be able to harvest the abovementioned gain.

In some embodiments, the instructions 106 (Fig. 1A), when executed by the at least one processor 102, cause the terminal device 12 to signal 302 (Fig. 3) the first information using at least one of: a) layer 3 signaling, for example radio resource control, RRC, signaling, b) layer 2 signaling, for example media access control, MAC, control element, CE, signaling, c) layer 1 signaling.

In some embodiments, a new, e.g. specific, reporting event may be defined, e.g. based on the measurement threshold, e.g. the s-MeasureConfig threshold, e.g. indicating to the network (device) that the terminal device 12 is no longer limited in scheduling due to intra-frequency measurements.

In some embodiments, e.g. when using MAC-CE layer signaling, a new MAC-CE message may be defined, e.g. indicating to the network (device) that the terminal device 12 is no longer limited in scheduling due to intra-frequency measurements.

In some embodiments, an L1 (layer 1) indication or message indicating to the network (device) e.g. that the terminal device 12 is no longer limited in scheduling due to intra-frequency measurements may be provided. In some embodiments, such L1 indication may be defined for a physical uplink control channel (PUCCH) or physical uplink shared channel (PUSCH).

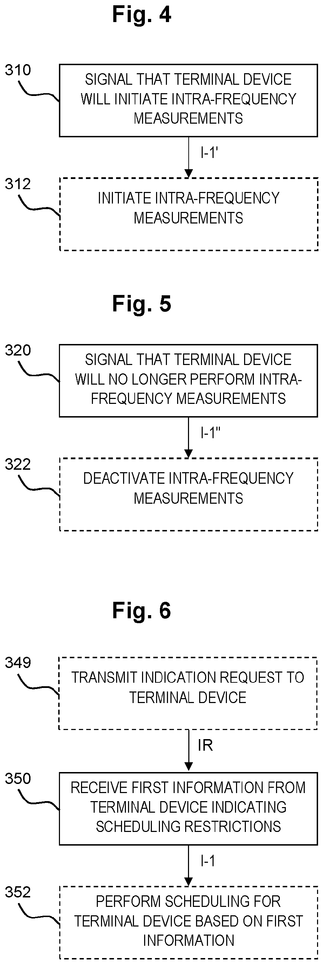

In some embodiments, Fig. 4, the instructions 106, when executed by the at least one processor 102, cause the terminal device 12 to signal 310, e.g. by using the first information I-1', that the terminal device 12 will initiate intra-frequency measurements. The optional block 312 of Fig. 4 symbolizes the optional intra-frequency measurements.

In some embodiments, Fig. 5, the instructions 106, when executed by the at least one processor 102, cause the terminal device 12 to signal 320, e.g. using the first information I-1'', that the terminal device 12 will no longer perform intra-frequency measurements. The optional block 322 of Fig. 5 symbolizes the optional (at least temporary) deactivation of the intra-frequency measurements.

Some embodiments, Fig. 1B, relate to an apparatus 200, comprising at least one processor 202, and at least one memory 204 storing instructions 206, the at least one memory 204 and the instructions 206 configured to, with the at least one processor 202, cause a network device, e.g. gNB, 14 to receive 350 (Fig. 6) the first information I-1 from the terminal device, e.g. UE, 12 the first information I-1 indicating whether the terminal device 12 has scheduling restrictions related to intra-frequency measurements.

In some embodiments, the instructions 206, when executed by the at least one processor 202, cause the network device 14 to perform 352 scheduling, e.g. for the terminal device 12, based on the first information I-1.

Optionally, in some embodiments, the instructions 206, when executed by the at least one processor 202, cause the network device 14 to transmit 349 an indication request IR to the terminal device 12, the indication request instructing the terminal device to signal the first information.

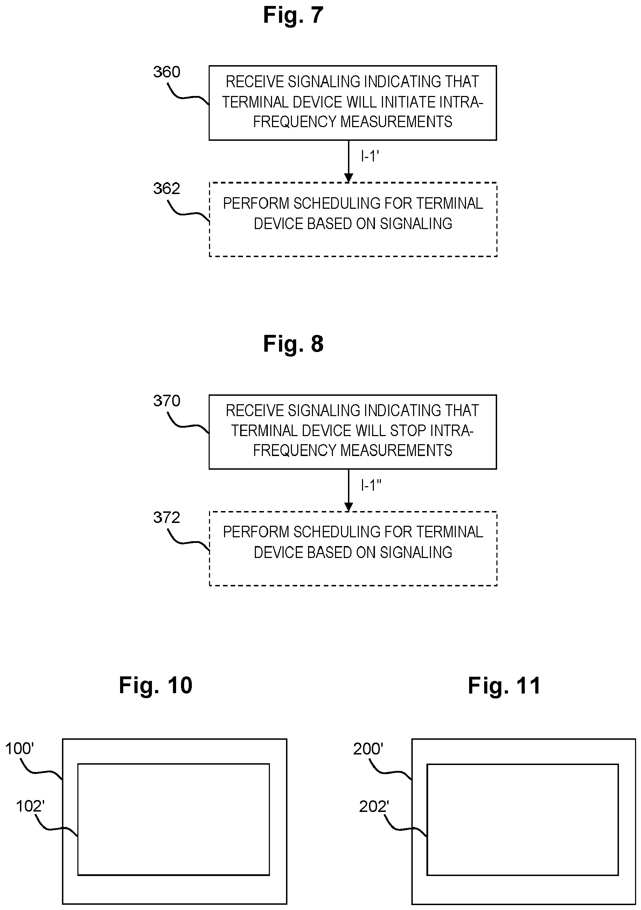

In some embodiments, Fig. 7, the instructions 206, when executed by the at least one processor 202, cause the network device 14 to receive 360 signaling, e.g. in the form of the first information I-1', from the terminal device 12 indicating that the terminal device 12 will initiate 312 intra-frequency measurements. The optional block 362 symbolizes the network device 14 performing scheduling for the terminal device 12 based on the received signaling I-1'.

In some embodiments, the instructions 206, when executed by the at least one processor 202, cause the network device 14 to receive 360 signaling, e.g. in the form of the first information I-1', from the terminal device 12 indicating that the terminal device 12 requests scheduling restrictions. The optional block 362 symbolizes the network device 14 allowing or enabling scheduling restrictions for the terminal device 12 based on the received signaling I-1'.

In some embodiments, Fig. 8, the instructions 206, when executed by the at least one processor 202, cause the network device 14 to receive 370 signaling, e.g. in the form of the first information I-1'', from the terminal device 12 indicating that the terminal device 12 will no longer perform, e.g. stop, intra-frequency measurements. The optional block 372 symbolizes the network device 14 performing scheduling for the terminal device 12 based on the received signaling I-1''.

In some embodiments, the instructions 206, when executed by the at least one processor 202, cause the network device 14 to receive 370 signaling, e.g. in the form of the first information I-1'', from the terminal device 12 indicating that the terminal device 12 does no longer request scheduling restrictions. The optional block 372 symbolizes the network device 14 disabling the scheduling restrictions for the terminal device 12 based on the received signaling I-1".

In some embodiments, the instructions, when executed by the at least one processor, cause the network device to perform scheduling for the terminal device based on the received signaling.

In some embodiments, Fig. 1B, the instructions 206, when executed by the at least one processor 202, cause the network device 14 to indicate to the terminal device 12 to signal the first information I-1, e.g. by transmitting an indication request IR (Fig. 3) to the terminal device 12, the indication request IR instructing the terminal device 12 to signal the first information.

In some embodiments, the network device 14 may be configured to include the indication request IR in and/or to transmit the indication request IR together with a measurement configuration.

Some embodiments, Fig. 3, relate to a method comprising: signaling 302, by means of a terminal device, e.g. UE, 12 to a network device, e.g. gNB, 14 a first information I-1 indicating whether the terminal device 12 has scheduling restrictions related to intra-frequency measurements. In some embodiments, the first information may also comprise at least one of the abovementioned signaling I-1', I-1''.

Some embodiments, Fig. 6, relate to a method comprising: receiving 350, by a network device, e.g. gNB, 14 a first information I-1 from a terminal device, e.g. UE, 12 the first information I-1 indicating whether the terminal device 12 has scheduling restrictions related to intra-frequency measurements. In some embodiments, the first information may also comprise at least one of the abovementioned signaling I-1', I-1''.

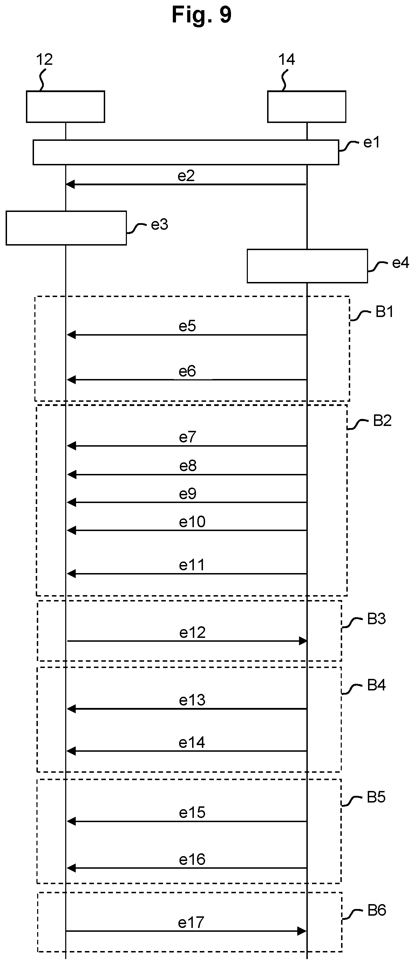

Fig. 9 schematically depicts a simplified flow chart according to some embodiments. Element e1 symbolizes a connected mode, e.g. the terminal device 12 is in a connected mode. Element e2 symbolizes a measurement configuration, e.g. s-MeasureConfig or e.g. based on s-MeasureConfig, wherein the measurement configuration e2 may in some embodiments also comprise the indication request IR, also see Fig. 3. Element e3 symbolizes the UE 12 performing intra-frequency measurements. Element e4 symbolizes the gNB 14 assuming scheduling restrictions, e.g. for the UE 12, e.g. due to the intra-frequency measurements e3.

Block B1 exemplarily depicts a scenario outside of an synchronization signal block (SSB) measurement timing configuration (SMTC) window according to some embodiments. Elements e5, e6 symbolize data being transmitted from the gNB 14 to the UE 12, wherein the data transmissions are e.g. scheduled without restrictions.

While the exemplary embodiment explained hereinafter with reference to Fig. 9 relates to SMTC windows, in some embodiments, the principle according to the embodiments may be applied to other synchronization and/or measurement signals, e.g. other than exemplarily mentioned 5G NR configurations, that may be used within a communications system.

Block B2 exemplarily depicts a scenario inside of an SMTC window according to some embodiments. Elements e7, e9 symbolize data being transmitted from the gNB 14 to the UE 12, whereas elements e8, e10 symbolizes hypothetical data transmissions to the UE 12, which, however, cannot be scheduled in some embodiments due to the scheduling restrictions due to the intra-frequency measurements. Elements e7, e9 and e11 symbolize a possible scheduled data transmission to the UE 12 with or without restrictions.

Block B3 exemplarily depicts a scenario where the search threshold, e.g. s-MeasureConfig, is exceeded, e.g. serving cell quality is better than set threshold. Element e12 symbolizes the UE 12 signaling the first information I-1 (also see for example Fig. 3, block 302 or Fig. 5, block 320), e.g. indicating that currently no restrictions due to intra-frequency measurements apply, e.g. intra-frequency measurement is currently not applied. In some embodiments, layer 2 signaling, e.g. one or more MAC CEs, may be used for the signaling e12 of the first information I-1. In some embodiments, layer 1 signaling and/or layer 3 signaling may also be used for the signaling e12 of the first information I-1.

Block B4 exemplarily depicts a scenario outside of an SMTC window according to some embodiments. Elements e13, e14 symbolize data being transmitted from the gNB 14 to the UE 12, wherein the data may be scheduled by the gNB without restrictions, e.g. based on the signaling e12.

Block B5 exemplarily depicts a scenario inside of an SMTC window according to some embodiments. Elements e15, e16 symbolize data being transmitted from the gNB 14 to the UE 12, wherein the data may be scheduled by the gNB without restrictions, e.g. based on the signaling e12.

Block B6 exemplarily depicts a scenario according to some embodiments, where the UE 12 signals via element e17 to the gNB 14 that the search threshold, e.g. s-MeasureConfig, is no longer exceeded. Based on this information, the gNB 14 can determine that the UE 12 will (re-)initiate performing intra-frequency measurements, and the gNB 14 may e.g. control its operation, e.g. scheduling for the terminal 12, based thereon, e.g. considering scheduling restrictions associated with the intra-frequency measurements of the UE 12.

As can be recognized from figure 9, one potential benefit of the principle according to the embodiments is that the method may at least in some embodiments enable improved scheduling opportunities, e.g. when the UE 12 is in good signal conditions, and e.g. configured with a search threshold, e.g. s-MeasureConfig. In some embodiments, when a serving cell quality is better than the search (e.g., s-MeasureConfig) threshold, there may be no measurement restrictions when the UE 12 is not performing intra-frequency measurements.

In some embodiments, the UE 12 may also indicate whether it continues inter-frequency measurements or not (e.g., using a same or different indication I-1', I-1'' as for intra-frequency measurements). With this approach, in some embodiments, there could be a common understanding between the UE 12 and the network whether potential configured or allocated measurement gaps may or can be (temporarily) released or not. In some embodiments, this operation could be configured by the network, see for example the indication request IR (Fig. 3), and indicated by the UE 12.

As already mentioned above, in some embodiments, the proposed indication I-1 from the UE 12, e.g. on whether perform intra-frequency neighbor cell measurements (and is subject to scheduling restrictions), may be conveyed as either RRC, MAC, or L1 signaling. In some embodiments, these options offer different tradeoffs between signalling robustness and agility.

In some embodiments, a robust signaling option may be using RRC, as e.g. being protected by both HARQ (hybrid automatic repeat request) and RLC (radio link control) retransmissions.

In some embodiments, MAC-based signaling may be faster (as e.g. compared to RRC), and may be protected by HARQ retransmissions.

In some embodiments, L1 signaling may be the fastest option (i.e., most agile, as compared to RRC- and MAC-based signaling), but may in some embodiments be more error-prone as not protected by retransmission mechanisms.

In some embodiments, e.g. in order allow the UE 12 to rapidly feed back the new proposed indication I-1, the network may configure the UE 12 with CG (Configured Grant) resources such that it can e.g. fastly convey the new indication I-1 on such CG resources. The use of CG resources for conveying such signalling in some embodiments avoids a potential dilemma that may otherwise occur if relying on DG (Dynamic Grant) mechanisms for transmission of such signalling messages.

Some embodiments, Fig. 10, relate to an apparatus 100' comprising means 102' for causing a terminal device, e.g. UE 12 (Fig. 2), to signal 302 (Fig. 3) to a network device, e.g. gNB, 14 a first information I-1 indicating whether a/the terminal device 12 a) has scheduling restrictions and/or b) indicates a need for scheduling restrictions related to intra-frequency measurements. In some embodiments, the means 102' may e.g. comprise at least one processor 102 (Fig. 1A), and at least one memory 104 storing instructions 106, the at least one memory 104 and the instructions 106 configured to, with the at least one processor 102, perform the step(s), e.g. of signaling 302.

Some embodiments, Fig. 11, relate to an apparatus 200' comprising means 202' for causing a network device, e.g. gNB, 14 to receive 350 (Fig. 6)a first information I-1 from a terminal device, e.g. UE, 12 the first information I-1 indicating whether the terminal device 12 a) has scheduling restrictions and/or b) indicates a need for scheduling restrictions related to intra-frequency measurements. In some embodiments, the means 202' may e.g. comprise at least one processor 202 (Fig. 1B), and at least one memory 204 storing instructions 206, the at least one memory 204 and the instructions 206 configured to, with the at least one processor 202, perform the step(s), e.g. of receiving 350.

Some embodiments relate to a wireless communications system 10 (Fig. 2) comprising at least one apparatus 100, 100', 200, 200' according to the embodiments.

In some embodiments, e.g. if the network has allowed the UE 12 not to perform measurements on non-serving cells, including the intra-frequency neighbor cells, there may be unused scheduling opportunities in those cases where the UE 12 is not performing intra-frequency measurements, but the network is not aware of this and hence, obeys the defined and assumed scheduling restrictions. The principle of the embodiments enables the network in some embodiments to use the otherwise non-scheduled symbols to be used for scheduling, e.g. when the UE 12 is not performing intra-frequency measurements. Hence, some embodiments at least sometimes enable a better system resource usage, and as a consequence e.g. improved end-user user-plane QoS experience.

## Claims

1. An apparatus (100), comprising at least one processor (102), and at least one memory (104) storing instructions (106), the at least one memory (104) and the instructions (106) configured to, with the at least one processor (102), cause a terminal device (12) to signal (302) to a network device (14) a first information (I-1; I-1'; I-1'') indicating whether the terminal device (12) has scheduling restrictions related to intra-frequency measurements.

2. The apparatus (100) according to claim 1, wherein the instructions (106), when executed by the at least one processor (102), cause the terminal device (12) to signal (302) the first information (I-1) when the terminal device (12) is configured (300) with a search threshold characterizing when the terminal device (12) should perform measurements associated with non-serving cells.

3. The apparatus (100) according to at least one of the preceding claims, wherein the instructions (106), when executed by the at least one processor (102), cause the terminal device (12) to signal (302) the first information (I-1) using at least one of: a) layer 3 signaling, for example radio resource control, RRC, signaling, b) layer 2 signaling, for example medium access control, MAC, signaling, c) layer 1 signaling.

4. The apparatus (100) according to at least one of the preceding claims, wherein the instructions (106), when executed by the at least one processor (102), cause the terminal device (12) to signal (310) that the terminal device (12) will initiate (312) intra-frequency measurements.

5. The apparatus (100) according to at least one of the preceding claims, wherein the instructions (106), when executed by the at least one processor (102), cause the terminal device (12) to signal (320) that the terminal device (12) will no longer perform (322) intra-frequency measurements.

6. An apparatus (200), comprising at least one processor (202), and at least one memory (204) storing instructions (206), the at least one memory (204) and the instructions (206) configured to, with the at least one processor (202), cause a network device (14) to receive (350) a first information (I-1) from a terminal device (12), the first information (I-1) indicating whether the terminal device (12) has scheduling restrictions related to intra-frequency measurements.

7. The apparatus (200) according to claim 6, wherein the instructions (206), when executed by the at least one processor (202), cause the network device (14) to perform (352) scheduling for the terminal device (12) based on the first information (I-1).

8. The apparatus (200) according to at least one of the claims 6 to 7, wherein the instructions (206), when executed by the at least one processor (202), cause the network device (14) to receive (360) signaling (I-1') from the terminal device (12) indicating that the terminal device (12) will initiate (312) intra-frequency measurements.

9. The apparatus (200) according to at least one of the claims 6 to 8, wherein the instructions (206), when executed by the at least one processor (202), cause the network device (14) to receive (370) signaling (I-1'') from the terminal device (12) indicating that the terminal device (12) will no longer perform (322) intra-frequency measurements.

10. The apparatus (200) according to at least one of the claims 8 to 9, wherein the instructions (206), when executed by the at least one processor (202), cause the network device (14) to perform (362; 372) scheduling for the terminal device (12) based on the received signaling (I-1'; I-1'').

11. The apparatus (200) according to at least one of the claims 6 to 10, wherein the instructions (206), when executed by the at least one processor (202), cause the network device (14) to transmit (349) an indication request (IR) to the terminal device (12), the indication request (IR) instructing the terminal device (12) to signal the first information (I-1).

12. A method comprising: signaling (302), by means of a terminal device (12), to a network device (14) a first information (I-1; I-1'; I-1'') indicating whether the terminal device (12) has scheduling restrictions related to intra-frequency measurements.

13. A method comprising: receiving (350), by a network device (14), a first information (I-1) from a terminal device (12), the first information (I-1) indicating whether the terminal device (12) has scheduling restrictions related to intra-frequency measurements.

14. An apparatus (100') comprising means (102') for causing a terminal device (12) to signal (302) to a network device (14) a first information (I-1; I-1'; I-1'') indicating whether a terminal device (12) has scheduling restrictions related to intra-frequency measurements.

15. An apparatus (200') comprising means (202') for causing a network device (14) to receive (350) a first information (I-1) from a terminal device (12), the first information (I-1) indicating whether the terminal device (12) a) has scheduling restrictions and/or b) indicates a need for scheduling restrictions related to intra-frequency measurements.
